# EUROPEAN PATENT APPLICATION

(11) **EP 4 481 189 A1**
(43) Date of publication of application: **25.12.2024**
(21) Application number: 23874124.3
(22) Date of filing: 28.09.2023
(51) Int. Cl.: F03B 13/10, F03B 13/06, F03G 7/04

(54) **SUBMARINE ELECTRIC POWER GENERATION SYSTEM**

(30) Priority: 07.10.2022 BR 102022020395
(71) Applicant: Petroleo Brasileiro S.A. - PETROBRAS, 20031-912 Rio de Janeiro (BR)
(72) Inventor: BIDART, Antonio Marcos Fonseca, Rio de Janeiro, RJ (BR); SPELTA, Marcelo Jorge Mendes, Rio de Janeiro, RJ (BR); DA SILVA, Luiz Carlos Tosta, Rio de Janeiro, RJ (BR); OLIVEIRA, Felipe Silva, Rio de Janeiro, RJ (BR); SILVA, Juliana Pereira, Rio de Janeiro, RJ (BR); VIEIRA, Alexandre Jaime Mello, Rio de Janeiro, RJ (BR); PASSARELLI, Fabio Menezes, Rio de Janeiro, RJ (BR); DA SILVA, Fabricio Soares, Rio de Janeiro, RJ (BR)
(74) Representative: Clarke, Modet y Cía., S.L.
(86) International application number: PCT/BR2023/050335
(87) International publication number: WO 2024/073829

(57) **Abstract**

The present invention relates to a subsea electrical energy generation and distribution system comprising one or more rotodynamic electrical energy generation systems, which comprise a set of rotating equipment, at least one central electrical energy distribution station, at least one static or dynamic type flow pattern homogenization/rectification device, wherein the flow rate from one or more producing reservoirs is sent to at least one manifold, which feeds one or more rotodynamic electrical energy generation systems that allow the creation of centers and/or generation and distribution grids to maximize the production of subsea electrical energy (increase in installed electrical power) in a non-intermittent manner through the utilization of the subsea arrangement of the field production system and/or the producing region connected to the SPU.

## Description

### Field of invention

The present invention pertains to the technical field of subsea electrical energy generation and distribution from the utilization of the kinetic and pressure energy of the fluid produced from producing reservoirs.

### Backgrounds of the invention

The advent of large reserves of oil and natural gas in the region known as pre-salt has been transforming the oil and gas sector in Brazil, positioning this country in a relevant position in terms of global hydrocarbon reserves.

However, the development of these oil and gas reserves involves overcoming several technological, economic, logistical and environmental challenges. Some of the biggest challenges are related to reducing the emission of CO₂ equivalent per produced barrel of oil, reducing capital costs (CAPEX, Capital Expenditure) and operational costs (OPEX, Operational Expenditure), and maximizing oil production, mainly in fields and exploratory blocks that have a high gas-oil ratio (GOR) and high CO₂ content.

In the case of fields with high GORs and CO₂ contents, the use of conventional processes for separating CO₂ and processing natural gas has become less effective and more costly, resulting in the need for arrangements and processes of greater complexity and consequently high costs, notably with respect to the size of natural gas processing plants. In these arrangements, the natural gas processing capacity of the stationary production unit (SPU) is often dependent on the concentration of CO₂ and GOR, the limiting factor for increasing the oil processing capacity.

In this context, the use of subsea processing and repressurization systems (gas and/or water) has great potential to remove the bottleneck and/or increase oil production.

The high pressure gravitational separation technology (HISEP^{®}), described in patent BR 102014002291-0 B1, for example, makes it possible to significantly reduce the GOR of the oil stream that reaches the SPU, which implies not only the reduction of size and complexity of the gas processing plant, but it also allows the oil production plateau to be extended for a longer period of time and the hydrocarbon recovery factor to be increased.

However, in the current scenario, the implementation of subsea separation and repressurization systems requires an increase in the electrical energy generation capacity of the Stationary Production Units (SPU), with a consequent negative impact on the GGEI (Greenhouse Gas Emissions Inventory) and additional increase in weight and area for generating electrical energy.

Additionally, it is worth highlighting that current SPU designs have insufficient flexibility to accommodate the modifications necessary to expand electrical energy generation.

Accordingly, solutions have been sought for the generation and distribution of subsea energy with high energy intensity, preferably from non-intermittent sources and that allow the reduction of CO₂ equivalent emissions per produced barrel of oil, which are capable of supplying with safety, economic attractiveness and low environmental impact future designs for subsea processing and repressurization (boosting) stations/systems.

### State of the art

In the State of the Art, there are systems, methods and equipment for generating electrical energy based on the conversion of energy from wave movement, sea currents, and hydraulic movement into electrical energy. However, these solutions for generating electrical energy are normally subject to intermittency and/or seasonal effects.

Patent document US 8779614 B2 addresses to the use of kinetic energy from fluids associated with oil production to generate electrical energy, presenting a system and method for converting the flow of a fluid (for example: chemical injection) from SPU in electrical or hydraulic energy for use in subsea conditions.

In turn, document US 20090151954 A1 describes a system and method for supplying energy to subsea support equipment. Specifically, the energy may be provided by diverting at least a portion of a fluid from a well production system to units of subsea support equipment, which may be disposed of in the vicinity of the seabed, seabed, or line of drilling mud. The well production system may include, but is not limited to, a water injection system, a gas-lift system, or combinations thereof.

Document US 7224080 B2 defines a subsea energy system for use in capturing free or residual energy (for example, thermal, geothermal, pressurized subsurface, wind, wave, solar or other free gases or liquids, waste or low-cost energy sources) that can then be converted and/or stored to power a subsea service or device during periods when the free or residual energy supply is not as abundant, is not available, or demands require a greater output than that provided at steady state. The subsea energy system may include: one or more energy capture devices (such as a turbine and/or a thermoelectric generator) for collecting free or waste energy and a fuel cell, oxygen and hydrogen electrolyzer, storage vessels, between others.

US patent 6998724 B2 discloses a system for generating electrical energy from a subsea installation, which includes at least one flow line, wherein the system comprises a turbine that is operatively connected to the flow line (injection or production line), wherein the flow through the turbine generates electrical energy.

US patent 5839508 B2 presents an electrical energy generation apparatus connected to the production string. The apparatus is housed laterally to the production string and diverts part of the flow to generate electrical energy using a turbine.

Document WO 2007055594 A1 discloses an arrangement for external starting up a subsea energy system. The subsea energy system comprises a subsea main energy distribution board powered from a topside power supply, at least one main energy distribution board control module controlling the subsea main energy distribution board, at least a subsea auxiliary energy distribution board, and a distribution board control module that controls said auxiliary energy distribution board. The subsea energy system further includes at least one critical switch control module connected to an external energy source, said critical switch control module being operable to control the main energy switch and/or auxiliary energy switch to perform a match.

In turn, document US 20130286549 A1 discloses a system and method for coupling subsea electrical energy. The system comprises a subsea electrical distribution system with at least one modular subsea circuit breaker assembly. The modular circuit breaker comprises a bus casing housing a bus. In one embodiment, the bus casing is pressurized with sulfur hexafluoride (SF6) gas. At least one circuit breaker casing housing a subsea circuit breaker is attached to the bus casing. The inside of the bus casing can be sealed from the inside of the circuit breaker casing. The circuit breaker casing can be pressurized with SF6 gas.

Document US 20140130498 A1 discloses a system that makes use of geothermal energy and combustion energy for energy generation. The system comprises an injection well in communication with an underground reservoir containing a native methane-containing solution at a first temperature, a production well in communication with the reservoir, a supply system that supplies a non-water-based working fluid to the injection well at a second temperature lower than the first temperature, wherein exposure of the working fluid to the native fluid causes a portion of methane to come out of solution to form a production fluid of at least a portion of the working fluid and the methane portion, and the exposure to the first temperatures heats the production fluid to a third temperature higher than the second temperature, wherein the heated production fluid enters the production well and an energy recovery apparatus in communication with the production well to convert energy in the production fluid into electricity, heat, or a combination thereof.

Document WO 2019012266 A1 describes a fluid flow control valve configured to provide a counterflow of a secondary fluid to a primary fluid flow, so as to stabilize or regulate turbulence and pressure changes with a network of conduit. The valve may find particular application in oil and gas production systems and to reduce or eliminate slugs in flow lines that use risers for vertical fluid transport.

In general, the works reported in the State of the Art involve the generation of subsea energy, generally using turbines specially designed to take advantage of sea currents, waves, tides, etc. The potential for generating electrical energy through waves and tides is dependent on conditions such as, for example, wave length, wave speed, phase, direction, etc., and are normally intermittent and/or seasonal due to the difficulty in maintain a regular supply of energy due to climate issues, tidal cycle, etc.

On the other hand, the subsea processing and repressurization systems need a constant and regular supply of electrical energy.

Additionally, a portion of the pressure and kinetic energy originating from fluids in reservoirs with high pressure, high productivity index, high GORs and varied CO₂ concentrations, such as those found in the Pre-salt, is wasted.

Patent application BR 102021020136-3 proposes a system for generating subsea electrical energy by taking advantage of the pressure and kinetic energy of hydrocarbon streams from reservoirs, in which the fluid produced from the reservoir can be in multiphase conditions with at least one phase in supercritical or critical conditions, with a gas stream in dense phase and at least one immiscible liquid.

The system is implemented through an arrangement that includes a flow homogenizer, a multistage high differential pressure rotodynamic type turbine, converter and/or power transformer.

However, application BR102021020136-3 does not present a solution that allows managing, centralizing and/or creating generation and distribution grids to maximize the production of subsea electrical energy (increased installed electrical power) in a non-intermittent manner through the utilization of the subsea arrangement of the field production system and/or the producing region connected to SPU.

### Brief description of the invention

The present invention defines, according to a preferred embodiment, a subsea electrical energy generation system comprising one or more rotodynamic electrical energy generation systems, which consist of a set of rotating equipment, at least one central station electrical energy distribution, at least one static or dynamic type flow pattern homogenization/rectification device, wherein the flow rate from one or more producing reservoirs is sent to at least one manifold, which then feeds one or more rotodynamic systems of electrical energy generation.

As will become evident from the detailed description of the present invention, it proposes, in an innovative way, a subsea system for generating/distributing subsea electrical energy that takes advantage of part of the energy naturally available in the production process, in the producing reservoir, to generate the electrical energy necessary to supply the demands of the processing and repressurization systems for subsea fluids that are close to or far from this generation and distribution center.

Briefly, the present invention aims at enabling a solution for the generation of non-intermittent subsea electrical energy, of high energy intensity and low carbon content through an energy generation/distribution center based on the use of pressure and kinetic energy of hydrocarbon streams from producing reservoirs.

Producing reservoirs with high pressure, high productivity index, high GORs and varied CO₂ concentrations, such as those found in the pre-salt, present appropriate conditions for use in these energy generation centers, as they normally waste part of the energy of the fluid during the production process.

Accordingly, the proposal of the present invention seeks to take advantage of this energy normally wasted in the production process to generate electrical energy for the purpose of powering subsea processing and repressurization systems close to or distant from the electrical energy generation center.

Regarding the advantages of the present invention, in addition to taking advantage of a source of natural energy that is currently wasted, the subsea electrical energy generation center also contributes to reducing dependence on energy generation via fossil fuels (with the consequent reduction from GGEI); in other words, it allows a reduction in CO₂ equivalent emissions per produced barrel of oil. Furthermore, the present invention also has the potential to reduce weight, complexity and space in the energy generation section of the SPU and can be considered a non-intermittent, high energy intensity source. In view of the disclosure, the present invention has the potential to contribute to achieving future carbon neutrality goals and increase the economic attractiveness of designs that use subsea separation systems.

### Brief description of the figures

In order to complement the present description and to obtain a better understanding of the features of the present invention, a set of figures is presented, wherein in an exemplified, although not limiting, manner there is represented its preferred embodiment.
Figure 1 illustrates a preferred embodiment of the subsea electrical energy generation system.
Figure 2 presents a preferred embodiment of the subsea electrical energy generation system in alternating current with transformers.
Figure 3 represents a preferred embodiment of the subsea electrical energy generation system in alternating current without transformers.
Figure 4 illustrates an additional preferred embodiment of the subsea electrical energy generation system in direct current.
Figure 5 shows another preferred embodiment of the subsea electrical energy generation system with decentralized generation and centralized distribution.
Figure 6 presents an additional preferred arrangement of the subsea decentralized electrical energy generation system in alternating current and with a transformer for each generator.
Figure 7 illustrates another preferred embodiment of the decentralized subsea electrical energy generation system in alternating current of medium and high voltage.
Figure 8 illustrates an example of a preferred embodiment of the decentralized subsea electrical energy generation system in direct current, without the use of transformers.
Figure 9a presents an embodiment of a flow pattern rectifying manifold.
Figure 9b presents another embodiment of a manifold and flow pattern rectifier for fluids with high GOR and low CO₂ content.
Figure 10 presents an exemplary application of the subsea electrical energy generation system of the present invention.

### Detailed description of the invention

The subsea electrical energy generation system, according to a preferred embodiment of the present invention, is described in detail based on the attached figures.

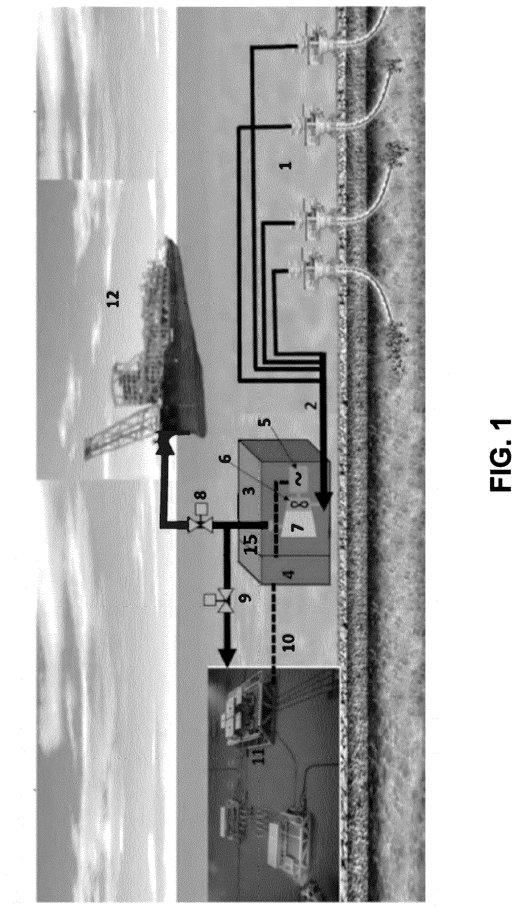

Figure 1 illustrates a preferred embodiment of the subsea electrical energy generation system 15. Specifically, the subsea electrical energy generation system 15, for example, can send the flow rate from one or more producing reservoirs 1 or producing wells 1 to at least one central manifold 2 that will feed one or more rotodynamic electrical energy generation systems 3.

Furthermore, according to the exemplary embodiment of the subsea electrical energy generation system 15 of Figure 1, the energy distribution is carried out in at least one central electrical energy distribution station 4, which comprises a power transformer, inverters, rectifiers, load distribution centers, among other equipment common to such a center, of common knowledge in the technical field in question.

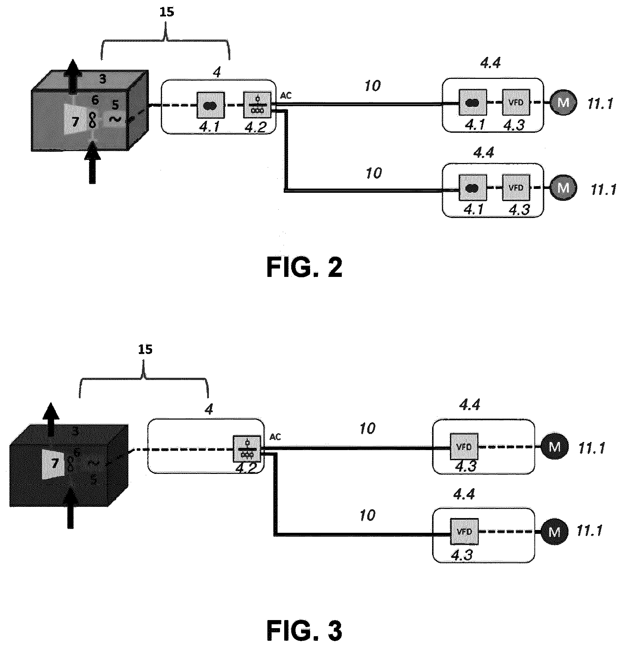

More specifically, the distribution of electrical energy from the central electrical energy distribution station 4 can be carried out in both alternating current and direct current, and the central electrical energy distribution station 4 is capable of supplying multiple loads, according to examples of embodiments presented in Figures 2, 3 and 4, detailed below.

In more detail, the multiphase fluid stream leaving the rotodynamic electrical energy generation systems 3 can be sent directly to a stationary production unit 12 (SPU) through at least one line 8. Or it can be sent, for example, for processing in a fluid processing and repressurization station 11 through at least one line 9; or it can be sent for onshore processing.

The electrical energy generated by the subsea electrical energy generation system 15 is then transmitted by power cables 10 to subsea consumption points, such as subsea processing and repressurization stations 11.

The rotodynamic electrical energy generation systems 3 preferably comprise a set of rotating equipment 7, wherein the set of rotating equipment 7 includes a plurality of multistage turbines, or a plurality of rotodynamic sets of multistage pumps operating in reverse, and/or a combination thereof, which are designed to recover the pressure and kinetic energy of fluids originating from natural gas or oil producing zones; that is, from producing reservoirs 1, in which the fluid produced may be in multiphase conditions, and may contain at least one phase in supercritical or critical conditions with, for example, a gas stream in dense phase (density greater than or equal to 200 kg/m³) and at least one immiscible liquid.

Furthermore, the set of rotating equipment 7, responsible for the utilization of kinetic and pressure energy, may consist of radial, semi-axial, axial rotors, or combinations thereof.

Additionally, the subsea electrical energy generation system of the present invention may include at least one generator 5 and at least one static or dynamic type flow pattern homogenization/rectification device 6, which may be installed upstream of the set of rotating equipment 7 and/or directly connected to the set of rotating equipment 7, or via central manifold 2, which can also be designed to serve as a flow pattern rectifier, minimizing the risk of intermittent flow.

Figure 2 presents a preferred embodiment of the subsea electrical energy generation system 15 in alternating current with transformers.

More specifically, Figure 2 shows an additional preferred embodiment of the subsea electrical energy generation system 15 with transformers for distributing electrical energy in alternating current through a central electrical energy distribution station 4 for loads over long distances. In the present embodiment, the subsea electrical energy generation system 15 additionally includes, for example, electrical transformers 4.1, switching devices 4.2, variable frequency inverters 4.3 and motor drive unit 4.4, and a set of power cables and fiber optics 10. The electrical energy in alternating current is transmitted by a set of power cables and fiber optics 10 to the subsea consumption points, such as, for example, electric motors at processing stations, reinjection, and subsea boosting 11.1.

Figure 3 represents another preferred embodiment of the subsea electrical energy generation system 15 in alternating current without transformers.

In more detail, Figure 3 illustrates the subsea electrical energy generation system 15 additionally comprising, for example, switching devices 4.2 and variable frequency inverters 4.3, motor drive unit 4.4, set of power cables and fiber optics 10, in which the electrical energy is transmitted by the set of power cables and fiber optics 10 to the subsea consumption points, such as, for example, electric motors at processing stations, reinjection, and subsea boosting 11.1.

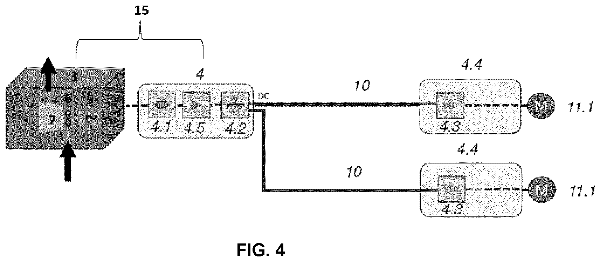

Figure 4 illustrates an additional preferred embodiment of the subsea electrical energy generation system 15 of the present invention, in which there is a distribution of electrical energy in high voltage direct current, aiming at supplying consumption points very distant from the generation.

According to Figure 4, the subsea electrical energy generation system 15 further comprises electrical transformers 4.1, switching devices 4.2, rectifier systems 4.5, variable frequency inverters 4.3, motor drive unit 4.4, a set containing power cables and fiber optics 10, in which electrical energy is transmitted through the set containing power cables and fiber optics 10 to subsea consumption points, such as, for example, electric motors at processing, reinjection and subsea boosting stations 11.1.

In particular, the conversion of kinetic energy and pressure energy into electrical energy, through the set of rotating equipment 7, can be carried out in a centralized and/or decentralized manner, in order to better meet the productive arrangement of the field and/or or the demand of the main consumers, using, for example, synchronous generators, asynchronous generators and/or, in the case of multistage pumps operating in reverse 7, motors operating as generators.

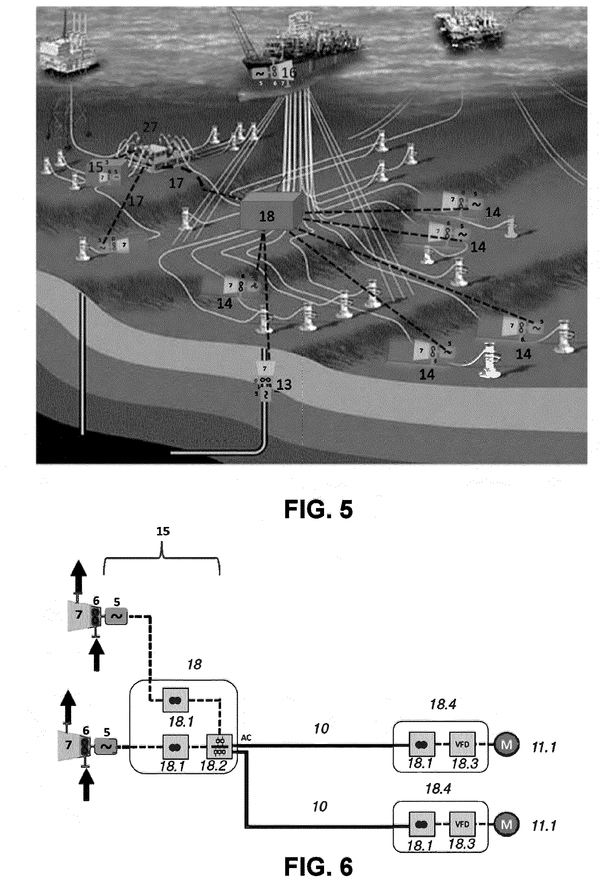

Figure 5 shows another preferred embodiment of the subsea electrical energy generation system 15, in which generation takes place in a decentralized manner and distribution is centralized.

Further, according to Figure 5, the subsea electrical energy generation system 15 additionally comprises, for example, one or more rotodynamic electrical energy generation systems 3, which comprises a set of rotating equipment 7 (multistage turbines, rotodynamic set of multistage pumps operating in reverse, and/or the combination thereof); generators and flow homogenization/rectification devices 6, for example, positioned at different points of the subsea production scheme, such as, for example, in the production string of wells 13, or close to the Christmas tree of wells 14.

Alternatively, the subsea electrical energy generation system 15, or the rotodynamic electrical energy generation system 3, or the static or dynamic type flow pattern homogenization/rectification device 6, can also be arranged at some meters from the inlet of a subsea separator 27 and/or positioned upstream of the first production separator on the topside of the SPU 16, wherein, in both cases, the electrical energy generation system was designed to recover pressure energy and kinetic energy of fluids originating from zones producing natural gas or oil, in which the fluid produced can be found, preferably, in multiphase conditions.

Additionally, the distribution/transmission of the generated energy can also occur directly through power cables 17 from points in the vicinity of the subsea electrical energy generation system 15; and/or centralized, through the transmission of the energy from the subsea electrical energy generation system 15, via power cables 17, for example, to a subsea distribution center 18 located close to the consumption points.

Figure 6 presents an additional preferred arrangement of the subsea decentralized electrical energy generation system 15 in alternating current and with a transformer for each generator.

More specifically, Figure 6 illustrates a preferred and exemplary embodiment of an arrangement of the decentralized subsea electrical energy generation system 15, in which there is a centralized distribution of electrical energy by a subsea distribution center 18 in alternating current. In the present embodiment of Figure 6, the subsea electrical energy generation system 15 comprises, for example, an electrical transformer 18.1 for each generator, switching devices 18.2, variable frequency inverters 18.3, motor drive unit 18.4, set of power cables and fiber optics 10. The electrical energy is transmitted by the set of power cables and fiber optics 10 to the subsea consumption points, such as, for example, electric motors at processing stations, reinjection, and subsea boosting 11.1.

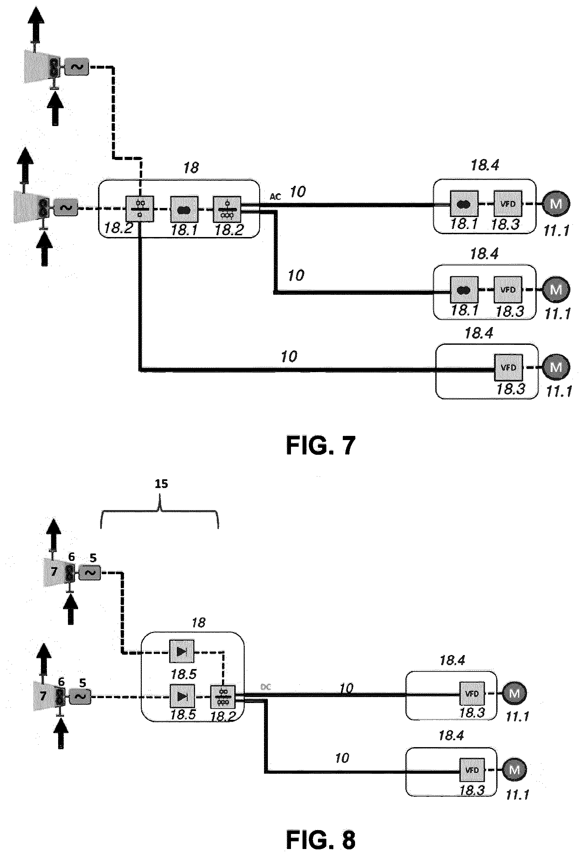

Figure 7 illustrates another preferred embodiment of the subsea decentralized electrical energy generation system 15 in alternating current, in which there is a centralized distribution of electrical energy by a subsea distribution center 18 in alternating current, with a switching device (switchgear) 18.2 including two buses: a medium voltage one for supplying nearby loads and a high voltage one for supplying distant loads. Furthermore, the present embodiment of the subsea electrical energy generation system of Figure 7 comprises, for example, electrical transformers 18.1, variable frequency inverters 18.3, motor drive unit 18.4, and a set of power cables and fiber optics 10. The electrical energy is transmitted via a set of power cables and fiber optics 10 to the subsea consumption points, such as, for example, electric motors at processing stations, reinjection, and subsea boosting 11.1.

Figure 8 illustrates an example of a preferred embodiment of the decentralized subsea electrical energy generation system 15, in which there is a centralized distribution of electrical energy in direct current by a subsea distribution center 18, without the use of transformers. The subsea electrical energy generation system 15 of the present embodiment comprises, for example, rectifier systems 18.5, variable frequency inverters 18.3, motor drive unit 18.4, and a set of power cables and fiber optics 10. The electrical energy is transmitted by the set of power cables and fiber optics 10 to the subsea consumption points, such as, for example, electric motors at processing stations, reinjection, and subsea boosting 11.1.

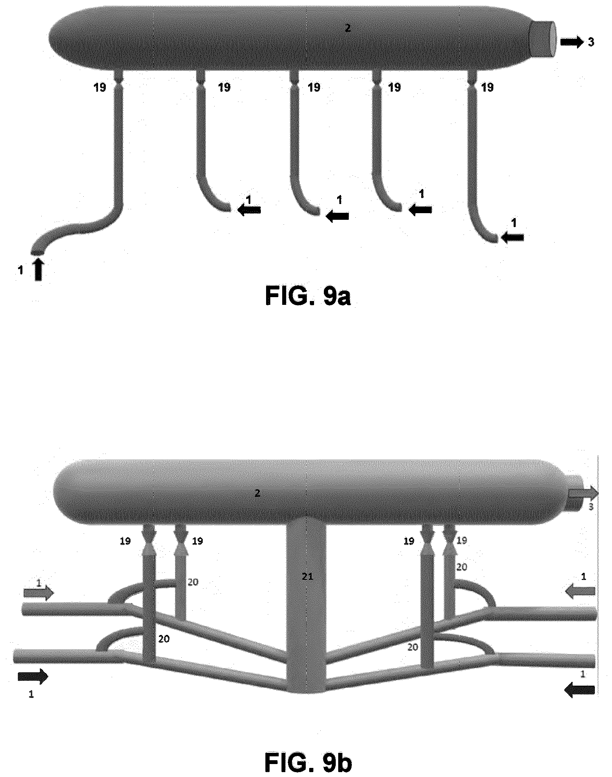

Figure 9a illustrates an example, without exhausting other flow pattern rectification solutions, of the configuration of a central manifold 2 designed to serve as a flow pattern rectifier; that is, a central manifold designed to minimize the risk of an intermittent flow pattern upstream of the set of rotating equipment 7 (multistage turbine rotodynamic sets, multistage pumps operating in reverse 7, and/or a combination thereof) and, therefore, In this way, reduce the potential for unbalanced mechanical efforts in the rotodynamic sets of the electrical energy generation devices.

Specifically, the manifold 2 receives the oil from the producing wells 1. Additionally, Venturi tubes or valves 19 can be installed immediately upstream of the manifold 2 to increase the velocity of the fluid entering the manifold 2 and, thus, favor the swirling/mixing of the fluid within the manifold 2. The manifold 2 may also contain conventional internal devices to promote the swirling/mixing of the fluid. The flow with a rectified flow pattern is sent to the rotodynamic electrical energy generation systems 3 of the central electrical energy distribution station 4.

Figure 9b illustrates another additional preferred embodiment of a central manifold configuration 2 designed to serve as a flow pattern rectifier; i.e., a central manifold designed to minimize the risk of an intermittent flow pattern upstream of the set of rotating equipment 7 (multistage turbine rotodynamic sets, multistage pumps operating in reverse, and/or a combination thereof 7). In this example, manifold 2 receives oil from the producing wells 1 and part of the volumetric fraction of gas present in the fluid goes through section 20 of the manifold and also passes through Venturi tubes or valves 19, which are installed immediately upstream of the manifold. 2, in order to increase the speed of the fluid that enters the manifold 2 and, thus, favor the swirling/mixing of the fluid within the manifold 2. The fluid with lower gas volume fraction (GVF) enters through the tube 21 and is dispersed through manifold 2; for example, through a liquid distributor/disperser tube to favor homogenization/gas-liquid mixing, mainly in scenarios where the fluid produced has a low CO₂ content (less than or equal to 20%, approximately). The manifold 2 may also contain other conventional internal devices to promote swirling/mixing of the fluid. The flow with a rectified flow pattern is sent to the rotodynamic electrical energy generation systems 3 of the central electrical energy distribution station 4.

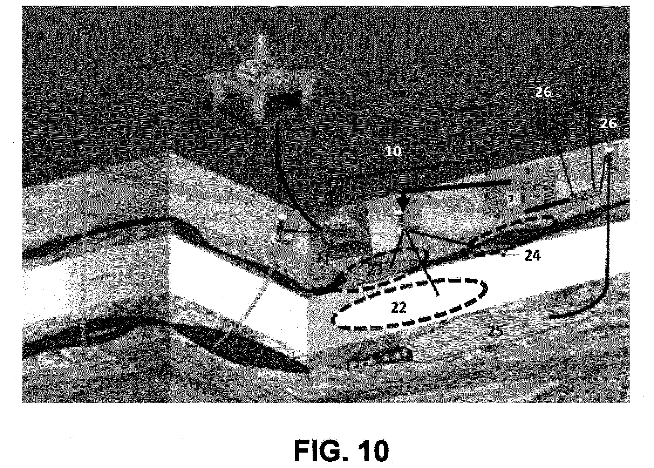

Figure 10 presents, in an illustrative way, without exhausting other applications or arrangements, a schematic of how can be embodied the utilization of part of the pressure energy and kinetic energy of fluids from producing reservoirs 25 or producing wells 25 with high pressure and high CO₂ (85% to 100%), and which have a low or very low percentage of hydrocarbon utilization, through the subsea electrical energy generation system of the present invention.

In particular, the subsea electrical energy generation system 15 totally or partially regulates the pressure and the flow rate of hydrocarbon upstream thereof.

In the exemplary case of Figure 10, the utilization of part of the pressure energy and kinetic energy is embodied by sending, for example, the flow rate from one or more producing wells 26 with CO₂ contents above 85% to a central manifold 2, which will feed one or more rotodynamic electrical energy generation systems 3, wherein the rotodynamic electrical energy generation system 3 comprises a set of rotating equipment 7, which includes multistage turbines, rotodynamic sets of multistage pumps operating in reverse 7 and/or a combination thereof, which have been designed to recover the pressure and kinetic energy of fluids from areas producing natural gas or oil, in which the fluid produced can be preferably in multiphase conditions; and the energy distribution is carried out in a central distribution station 4 that includes a power transformer, rectifiers, among other equipment.

More specifically, the fluid stream, preferably a multiphase one, leaves the rotodynamic electrical energy generation systems 3 with sufficient autogenous pressure for natural reinjection of this fluid without a pressure elevation system; for example, in depleted oil reservoirs 24, aiming at increasing advanced oil recovery, or simply for geological storage of the CO₂-rich fluid, and/or this can be reinjected into saline aquifers 23, other shallower reservoirs, and salt caverns 22 of the lowest pressure.

Complementarily, the set of rotating equipment 7, responsible for the utilization of kinetic energy and pressure, may consist of radial, semi-axial, axial rotors or combinations thereof. The set of rotating equipment 7 may also contain a static or dynamic type flow pattern homogenization/rectification device 6 installed upstream of the rotodynamic set and/or directly connected to this set, or via a central manifold 2, which can also be designed to serve as a flow pattern rectifier to minimize the risk of intermittent flow.

In particular, the subsea electrical energy generation system 15 is applied in oil producing reservoirs 1 or producing wells 1 with high pressure, wherein the produced reservoir fluid is preferably in multiphase conditions, high productivity index, gas-oil ratio (GOR) from 50 Sm³/Sm³ to 10,000 Sm³/Sm³; more particularly, a GOR between 100 Sm³/Sm³ and 3500 Sm³/Sm³, and CO₂ concentrations in the reservoir fluid that can vary from 0.1% to 85%; more particularly, between 2% and 80%.

Additionally, the subsea electrical energy generation system 15 is applied in oil producing reservoirs 1 or producing wells 1 of high pressure and high temperature (< 250 °C), aiming at generating energy and consequently reduce, control or adjust the arrival temperature at the production unit.

Further, the subsea electrical energy generation system 15 is applied in producing reservoirs 1, specifically zones producing natural gas (with or without the presence of condensable hydrocarbons) with high pressure (up to 1500 bar (150 MPa)), high productivity index and CO₂ concentrations that can vary from 0.1% to 85%; more particularly, between 2% and 80%.

Complementarily, the subsea electrical energy generation system 15 is applied in oil reservoirs with high pressure and high CO₂; particularly, from 85% to 100% and that have a low or very low percentage of hydrocarbon utilization. In this case, the utilization of part of the pressure and kinetic energy of the fluid is embodied by passing the fluid through the subsea electrical energy generation system 15 with the maintenance of an autogenous pressure downstream of this system 15, which is sufficient for natural reinjection of this fluid (without pressure lifting system); for example, in depleted oil reservoirs 24, aiming at increasing advanced oil recovery, or simply for geological storage of the CO₂-rich fluid, and/or which can be reinjected into saline aquifers 23 and salt caverns 22.

Additionally, the producing reservoirs 1 present a pressure between 100 bar (10 MPa) and 1500 bar (150 MPa); more preferably, between 200 bar (20 MPa) and 700 bar (70 MPa).

In particular, the subsea electrical energy generation system 15 receives and distributes to the subsea consumers the electrical energy generated on the topside of stationary production units 12 from conventional generation and/or from the utilization of the pressure and kinetic energy recovered by the joint use of rotating equipment 7 formed by turbines or multistage rotodynamic sets of pumps operating in reverse 7, and/or a combination thereof, which have been installed upstream of the first topside separator of the SPU 16 to generate electrical energy.

In particular, the subsea electrical energy generation system 15 receives and distributes to the subsea consumers the electrical energy generated by other renewable electrical generation sources, such as, for example, wind, solar and tidal sources.

### Example 1

Example 1 detailed herein is based on real data from a practical application of the potential use of the present invention.

In particular, example 1 considered the utilization of part of the kinetic and pressure energy of 8 producing wells, employing a subsea decentralized electrical energy generation arrangement, as previously described in the preferred embodiment of Figure 5.

In this example 1, the decentralized energy generation can be embodied, for example, by the use of a set of rotating equipment (multistage turbines, rotodynamic set of multistage pumps operating in reverse, or a combination thereof), generators, flow homogenization/rectification devices connected to the production system of each producing well.

Especially in example 1, the subsea electrical energy generation systems 15 of each producing well are positioned immediately after the Christmas tree, and the fluid leaving the discharge of the subsea electrical energy generation system 15 is sent directly to the topside of the SPU. The fluid produced can contain between 15% and 50% CO₂ and GOR (gas-oil ratio) of approximately 300 Sm³/Sm³ to 500 Sm³/Sm³. Additionally, the average distance between the Christmas tree of each well and the topside of the SPU is approximately 3 km.

The distribution/transmission of the electrical energy generated can also occur directly through power cables 17 from points in the vicinity of the subsea electrical energy generation system 15, and/or centrally, through the transmission of energy from the subsea electrical energy generation system 15 via power cables 17, for example, to a subsea distribution center 18.

In example 1, an average flow rate per producing well was set at 7 million kg/day (gas and liquid) and a usable pressure differential for energy generation of approximately 100 bar (10 MPa) per producing well. Thus, considering the energy recovery from the 8 producing wells, the total available power can reach approximately 10.8 MW. In this way, considering a global efficiency of subsea electrical generation in the range of 90% to 20%, there would be an energy availability of between 9.7 MW and 2.2 MW of electrical power available for supply to subsea electrical consumers or for transmission.

Additionally, in example 1, for comparison purposes, the use of this system upstream of the first production separator (topside of the SPU) was also evaluated, using a pressure delta of 80 bar (8 MPa). In this case, considering the topside energy recovery of the 8 producing wells, the total available power can reach approximately 18.7 MW, assuming an overall efficiency of subsea electrical generation in the range of 90% to 20%. Thus, there would be an energy availability of between 16.8 MW and 3.7 MW of electrical power available to supply subsea and/or topside electrical consumers.

### Example 2

Example 2 is based on real data from an exemplary practical application of the present invention to illustrate the potential use thereof.

In particular, example 2 considered the utilization of part of the kinetic and pressure energy of 10 producing wells through the use of a subsea arrangement of the central type of decentralized energy generation, as described in Figure 5.

Specifically, in example 2, the decentralized energy generation can be embodied, for example, by the use of a set of rotating equipment (multistage turbines, rotodynamic set of multistage pumps operating in reverse, or combination thereof), generators, flow homogenization/rectification devices connected to the production system of each producing well.

Furthermore, the subsea electrical energy generation systems 15 of each producing well are positioned immediately after the Christmas tree, and wherein the fluid that leaves the discharge from the subsea electrical energy generation system 15 is sent directly to the topside of the SPU. The fluid produced can contain between 60% and 80% CO₂ and GOR (gas-oil ratio) of approximately 2500 Sm³/Sm³ to 3000 Sm³/Sm³. Additionally, the average distance between the Christmas tree of each well and the topside of the SPU is around 2.5 km.

The distribution/transmission of the generated energy can also occur directly through power cables 17 from points in the vicinity of the subsea electrical energy generation system 15, and/or centrally, through the transmission of energy coming from the subsea electrical energy generation system 15, via power cables 17, for example, for a subsea distribution center 18.

In this example, an average flow rate per producing well of 10 million kg/day (gas and liquid) and a utilizable pressure differential for energy generation of approximately 100 bar (10 MPa) per producing well were set. Thus, considering the energy recovery from the 10 producing wells, the total available power can reach approximately 16.2 MW. In this way, for an overall efficiency of subsea electrical generation in the range of 90% to 20%, there would be an energy availability of between 14.6 MW and 3.2 MW of electrical power available for supply to subsea electrical consumers, or for transmission.

Complementarily, for comparison purposes, the use of this system 15 was also evaluated upstream of the first production separator (topside of the SPU 12), considering the same pressure delta of 100 bar (10 MPa) per producing well. In this case, for topside energy recovery from the 10 producing wells, the total available power can reach approximately 26.6 MW, considering an overall efficiency of subsea electrical generation in the range of 90% to 20%. Thus, there would be an energy availability of between 23.9 MW and 5.3 MW of electrical power available to supply subsea and/or topside electrical consumers.

Said system and method of the present invention, as described and detailed from Figures 1 to 10, is capable of enhancing the production of oil fields (oil or gas producing zones); for example, with a high productivity index, high pressures (the fluid produced may be in supercritical, critical or subcritical conditions), high GORs and variable CO₂ concentrations.

The subsea system for generating electrical energy, centralized and non-intermittent, takes advantage of a natural source of energy. Thus, it has the potential to reduce CO₂ equivalent emissions per produced barrel of oil.

The invention has been described herein with reference being made to its preferred embodiments. However, it should be clear that the invention is not limited to these embodiments, and those skilled in the art will immediately appreciate that changes and substitutions can be made within the scope described herein.

## Claims

1. A subsea electrical energy generation system 15, **characterized in that** it comprises:
one or more rotodynamic electrical energy generation systems 3, which comprise a set of rotating equipment 7,
at least one central electrical energy distribution station 4,
at least a static or dynamic type flow pattern homogenization/rectification device 6,
wherein the flow rate from one or more producing reservoirs 1 is sent to at least one manifold 2, which feeds the one or more rotodynamic electrical energy generation systems 3.

2. The subsea electrical energy generation system 15 according to claim 1, **characterized in that** the set of rotating equipment 7 includes a plurality of multistage turbines or a plurality of rotodynamic sets of multistage pumps operating in reverse, and/or a combination thereof.

3. The subsea electrical energy generation system 15 according to claim 2, **characterized in that** the set of rotating equipment 7 is designed to convert the pressure and kinetic energy of fluids from producing reservoirs 1 into electrical energy, wherein said conversion can be carried out in a centralized and/or decentralized manner, using synchronous generators, asynchronous generators and/or, in the case of multistage pumps operating in reverse, motors operating as generators; and
wherein the fluid produced can be in multiphase conditions, containing at least one phase in supercritical or critical conditions with a dense phase gas stream with a density greater than or equal to 200 kg/m³ and at least one immiscible liquid.

4. The subsea electrical energy generation system 15 according to claim 1, **characterized in that** the central electrical energy distribution station 4 comprises power transformer, inverters, rectifiers, load distribution centers.

5. The subsea electrical energy generation system 15 according to claim 1 or 4, **characterized in that** the distribution of electrical energy from the central electrical energy distribution station 4 can be carried out both in alternating current and in direct current.

6. The subsea electrical energy generation system 15 according to claim 1, **characterized in that** the static or dynamic type flow pattern homogenization/rectification device 6 is installed upstream of the set of rotating equipment 7 and/or directly connected to the set of rotating equipment 7 or via the central manifold 2.

7. The subsea electrical energy generation system 15 according to claim 3, **characterized in that** the multiphase fluid stream leaving the rotodynamic electrical energy generation systems 3 is sent directly to a stationary production unit 12 (SPU), through at least one line 8, or is sent for processing at a fluid processing and repressurization (boosting) station 11 through at least one line 9; or is sent for onshore processing.

8. The subsea electrical energy generation system 15 according to claim 1, **characterized in that** the rotodynamic electrical energy generation system 3 and/or the static or dynamic type flow pattern homogenization/rectification device 6 are positioned in the production string of the wells 13, or in the vicinity of the wellhead 14, or at the inlet of a subsea separator 27, or upstream of the first production separator on the topside of the SPU 16.

9. The subsea electrical energy generation system 15 according to claim 1, **characterized in that** the distribution of electrical energy occurs through power cables 17 from points in the vicinity of the subsea electrical energy generation system 15, and/or centralized, through the transmission of the energy from the subsea electrical energy generation system 15 via power cables 17 to a subsea distribution center 18 located close to the consumption points.

10. The subsea electrical energy generation system 15 according to claim 1, **characterized in that** the manifold 2 is designed to serve as a flow pattern rectifier.

11. The subsea electrical energy generation system 15 according to claim 1, **characterized in that** the hydrocarbon pressure and flow rate upstream of the subsea electrical energy generation system 15 are regulated by the subsea electrical energy generation system 15.

12. The subsea electrical energy generation system 15 according to claim 1, **characterized in that** the producing reservoirs 1 have high pressure, wherein the produced reservoir fluid is, preferably, in multiphase conditions, high productivity index, gas-oil ratio (GOR) of 50 Sm³/Sm³ to 10,000 Sm³/Sm³, more particularly, a GOR between 100 Sm³/Sm³ and 3500 Sm³/Sm³, and CO₂ concentrations in the reservoir fluid that can vary from 0.1 % to 85%, more particularly, between 2% and 80%.

13. The subsea electrical energy generation system 15 according to claim 1, **characterized in that** the producing reservoirs 1 have high pressure and temperature ≤ 250 °C.

14. The subsea electrical energy generation system 15 according to claim 1, **characterized in that** the producing reservoirs 1 are natural gas producing zones with pressure of up to 1500 bar (150 MPa), high productivity indexes and CO₂ concentrations that can vary from 0.1% to 85%, more particularly between 2% and 80%.

15. The subsea electrical energy generation system 15 according to claim 1, **characterized in that** the producing reservoirs 25 have high pressure and high CO₂, particularly from 85% to 100%, and a low percentage of hydrocarbon utilization; and wherein the fluid passes through the subsea electrical energy generation system 15 with the maintenance of an autogenous pressure downstream of the same that allows its reinjection into depleted reservoirs, salt caverns and/or shallow reservoirs.

16. The subsea electrical energy generation system 15 according to claim 1, **characterized in that** the producing reservoirs 1 have a pressure between 100 bar (10 MPa) and 1500 bar (150 MPa), more preferably, between 200 bar (20 MPa) and 700 bar (70 MPa).

17. The subsea electrical energy generation system 15 according to claim 1, **characterized in that** the subsea electrical energy generation system 15 receives and distributes to the subsea consumers electrical energy generated in stationary production units 12 from conventional generation and/or from the set of rotating equipment 7.

18. The subsea electrical energy generation system 15 according to claim 1, **characterized in that** the subsea electrical energy generation system 15 receives and distributes to the subsea consumers the electrical energy generated by other renewable sources of electrical generation, such as, for example, wind, solar and tidal sources.
